# EUROPEAN PATENT APPLICATION

(11) **EP 4 697 811 A1**
(43) Date of publication of application: **18.02.2026**
(21) Application number: 23932456.9
(22) Date of filing: 13.04.2023
(51) Int. Cl.: H04W 52/02, H04W 76/28

(54) **WIRELESS COMMUNICATION METHOD AND DEVICE**

(71) Applicant: GUANGDONG OPPO MOBILE TELECOMMUNICATIONS CORP., LTD., Dongguan, Guangdong 523860 (CN)
(72) Inventor: HE, Chuanfeng, Dongguan, Guangdong 523860 (CN)
(74) Representative: Mewburn Ellis LLP
(86) International application number: PCT/CN2023/088064
(87) International publication number: WO 2024/212166

(57) **Abstract**

Embodiments of the present disclosure provide a method for wireless communication and a device. A zero-power device is in a communication dormant state within a first time-domain resource, such that the zero-power device can perform energy harvesting more efficiently within the first time-domain resource, while avoiding power consumption that would otherwise be caused by the zero-power device performing, within the first time-domain resource, continuous blind detection of signals that may be sent to the zero-power device by a device communicating with the zero-power device. The method for wireless communication includes acquiring, by a zero-power device, a first time-domain resource, where the zero-power device is in a communication dormant state within the first time-domain resource.

## Description

### TECHNICAL FIELD

The embodiments of the present disclosure relate to the field of communication, and in particularly to a method for wireless communication and a device.

### BACKGROUND

Zero-power devices have low complexity and low cost, can achieve maintenance-free and battery-free operation, can support energy harvesting, and can enable high-density and large-scale deployment at a relatively low cost. However, at the current stage, the performance of energy harvesting of the zero-power device is relatively poor, and thus how to improve the performance of energy harvesting of the zero-power device is a problem to be solved.

### SUMMARY

Embodiments of the present disclosure provide a method for wireless communication and a device. A zero-power device is in a communication dormant state within a first time-domain resource, such that the zero-power device can perform energy harvesting more efficiently within the first time-domain resource, while avoiding power consumption that would otherwise be caused by the zero-power device performing, within the first time-domain resource, continuous blind detection of signals that may be sent to the zero-power device by a device communicating with the zero-power device.

In a first aspect, a method for wireless communication is provided. The method includes acquiring, by a zero-power device, a first time-domain resource, where the zero-power device is in a communication dormant state within the first time-domain resource.

In a second aspect, a method for wireless communication is provided. The method includes sending, by a communication device, first indication information to a zero-power device, where the first indication information indicates at least one of: a position of the first time-domain resource, a length of the first time-domain resource, a frequency-domain resource corresponding to the first time-domain resource, or period information for the first time-domain resource. The zero-power device is in a communication dormant state within the first time-domain resource.

In a third aspect, a zero-power device is provided. The zero-power device is configured to execute the method in the first aspect. Specifically, the zero-power device includes a functional module(s) configured to execute the method in the first aspect.

In a fourth aspect, a communication device is provided. The communication device is configured to execute the method in the second aspect. Specifically, the communication device includes a functional module(s) configured to execute the method in the second aspect.

In a fifth aspect, a zero-power device is provided. The zero-power device includes a processor and a memory. The memory is configured to store computer programs, and the processor is configured to call and execute the computer programs stored in the memory, such that the zero-power device executes the method in the first aspect.

In a sixth aspect, a communication device is provided. The communication device includes a processor and a memory. The memory is configured to store computer programs, and the processor is configured to call and execute the computer programs stored in the memory, such that the communication device executes the method in the second aspect.

In a seventh aspect, an apparatus is provided. The apparatus is configured to implement any one of the methods in the first aspect to the second aspect. Specifically, the apparatus includes a processor configured to call and execute computer programs from a memory, such that a device equipped with the apparatus executes any one of the methods in the first aspect to the second aspect.

In an eighth aspect, a computer-readable storage medium is provided. The storage medium is configured to store computer programs, where the computer programs can cause a computer to execute any one of the methods in the first aspect to the second aspect.

In a ninth aspect, a computer program product is provided. The computer program product includes computer program instructions, where the computer program instructions cause a computer to execute any one of the methods in the first aspect to the second aspect.

In a tenth aspect, a computer program is provided, wherein when executed on a computer, the computer program causes the computer to execute any one of the methods in the first aspect to the second aspect.

By means of the above technical solutions, the zero-power device is in a communication dormant state within the first time-domain resource, such that the zero-power device can perform energy harvesting more efficiently within the first time-domain resource, while avoiding power consumption that would otherwise be caused by the zero-power device performing, within the first time-domain resource, continuous blind detection of signals that may be sent to the zero-power device by a device communicating with the zero-power device.

### BRIEF DESCRIPTION OF THE DRAWINGS

FIG. 1 is a schematic diagram of a communication system architecture to which embodiments of the present disclosure are applicable.
FIG. 2 is a schematic flow chart of a method for wireless communication according to embodiments of the present disclosure.
FIG. 3 is a schematic diagram illustrating state switching according to embodiments of the present disclosure.
FIG. 4 is a schematic diagram illustrating a periodic first time-domain resource according to embodiments of the present disclosure.
FIG. 5 is a schematic diagram illustrating periodic first indication information according to embodiments of the present disclosure.
FIG. 6 is a schematic flow chart of another method for wireless communication according to embodiments of the present disclosure.
FIG. 7 is a schematic block diagram of a zero-power device according to embodiments of the present disclosure.
FIG. 8 is a schematic block diagram of a communication device according to embodiments of the present disclosure.
FIG. 9 is a schematic block diagram of another communication device according to embodiments of the present disclosure.
FIG. 10 is a schematic block diagram of an apparatus according to embodiments of the present disclosure.
FIG. 11 is a schematic block diagram of a communication system according to embodiments of the present disclosure.

### DETAILED DESCRIPTION

The following will describe technical solutions of embodiments of the present disclosure with reference to the accompanying drawings in embodiments of the present disclosure. Apparently, the embodiments described herein are merely some embodiments, rather than all embodiments, of the present disclosure. Based on the embodiments of the present disclosure, all other embodiments obtained by those of ordinary skill in the art without creative effort shall fall within the protection scope of the present disclosure.

The technical solutions of embodiments of the present disclosure are applicable to various communication systems, for example, a global system of mobile communication (GSM), a code division multiple access (CDMA) system, a wideband code division multiple access (WCDMA) system, a general packet radio service (GPRS), a long term evolution (LTE) system, an advanced LTE (LTE-A) system, a new radio (NR) system, an evolved system of an NR system, an LTE-based access to unlicensed spectrum (LTE-U) system, an NR-based access to unlicensed spectrum (NR-U) system, a non-terrestrial networks (NTN) system, a universal mobile telecommunication system (UMTS), a wireless local area network (WLAN), an internet of things (IoT), a wireless fidelity (WiFi), a 5^{th}-generation (5G) communication system, a 6^{th}-generation (6G) communication system, or other communication systems, etc.

Generally speaking, a conventional communication system generally supports a limited quantity of connections and therefore is easy to implement. However, with development of communication technology, a mobile communication system will not only support conventional communication but also support, for example, device to device (D2D) communication, machine to machine (M2M) communication, machine type communication (MTC), vehicle to vehicle (V2V) communication, sidelink communication, vehicle to everything (V2X) communication, etc. Embodiments of the present disclosure can also be applied to these communication systems.

In some embodiments, the communication system in embodiments of the present disclosure may be applied to a carrier aggregation (CA) scenario, or may be applied to a dual connectivity (DC) scenario, or may be applied to a standalone (SA) scenario.

In some embodiments, the communication system in embodiments of the present disclosure is applicable to an unlicensed spectrum, and an unlicensed spectrum may be regarded as a shared spectrum. Alternatively, the communication system in embodiments of the present disclosure is applicable to a licensed spectrum, and a licensed spectrum may be regarded as a non-shared spectrum.

In some embodiments, the communication system in embodiments of the present disclosure may be applicable to frequency range 1 (FR1) (corresponding to a frequency range of 410 Megahertz (MHz) to 7.125 Gigahertz (GHz), FR2 (corresponding to a frequency range of 24.25 GHz to 52.6 GHz), as well as new frequency ranges, such as high-frequency bands corresponding to a frequency range of 52.6 GHz to 71 GHz or a frequency range of 71 GHz to 114.25 GHz.

Various embodiments of the present disclosure are described in connection with a network device and a terminal device. The terminal device may also be referred to as a user equipment (UE), an access terminal, a subscriber unit, a subscriber station, a mobile station, a remote station, a remote terminal, a mobile device, a user terminal, a terminal, a wireless communication device, a user agent, or a user device, etc.

The terminal device may be a station (ST) in a WLAN, a cellular radio telephone, a cordless telephone, a session initiation protocol (SIP) telephone, a wireless local loop (WLL) station, a personal digital assistant (PDA), a handheld device or a computing device with wireless communication functions, other processing devices coupled with a wireless modem, an in-vehicle device, a wearable device, and a terminal device in a next-generation communication system, for example, a terminal device in an NR network, or a terminal device in a future evolved public land mobile network (PLMN), etc.

In embodiments of the present disclosure, the terminal device may be deployed on land, which includes indoor or outdoor, handheld, wearable, or in-vehicle. The terminal device may also be deployed on water (such as ships, etc.). The terminal device may also be deployed in the air (such as airplanes, balloons, satellites, etc.).

In embodiments of the present disclosure, the terminal device may be a mobile phone, a pad, a computer with wireless transceiver functions, a virtual reality (VR) terminal device, an augmented reality (AR) terminal device, a wireless terminal device in industrial control, a wireless terminal device in self driving, a wireless terminal device in remote medicine, a wireless terminal device in smart grid, a wireless terminal device in transportation safety, a wireless terminal device in smart city, or a wireless terminal device in smart home, a vehicle-mounted communication device, a wireless communication chip/application specific integrated circuit (ASIC)/system on chip (SoC).

By way of explanation rather than limitation, in embodiments of the present disclosure, the terminal device may also be a wearable device. The wearable device may also be called a wearable smart device, which is a generic term of wearable devices obtained through intelligentization design and development on daily wearing products with wearable technology, for example, glasses, gloves, watches, clothes, accessories, and shoes. The wearable device is a portable device that can be directly worn or integrated into clothes or accessories of a user. In addition to being a hardware device, the wearable device can also realize various functions through software support, data interaction, and cloud interaction. A wearable smart device in a broad sense includes, for example, a smart watch or smart glasses with complete functions and large sizes and capable of realizing all or part of functions without relying on a smart phone, and for example, various types of smart bands and smart jewelries for physical monitoring, of which each is dedicated to application functions of a certain type and required to be used together with other devices such as a smart phone.

In embodiments of the present disclosure, the network device may be a device configured to communicate with a mobile device, and the network device may be an access point (AP) in a WLAN, a base transceiver station (BTS) in GSM or CDMA, or may be a Node B (NB) in WCDMA, or may be an evolutional Node B (eNB or eNodeB) in LTE, or a relay station or AP, or an in-vehicle device, a wearable device, a network device, a base station (gNB), or a transmission reception point (TRP) in an NR network, a network device in a future evolved PLMN, or a network device in an NTN, etc.

By way of explanation rather than limitation, in embodiments of the present disclosure, the network device may be mobile. For example, the network device may be a mobile device. In some embodiments, the network device may be a satellite or a balloon base station. For example, the satellite may be a low earth orbit (LEO) satellite, a medium earth orbit (MEO) satellite, a geostationary earth orbit (GEO) satellite, a high elliptical orbit (HEO) satellite, etc. In some embodiments, the network device may also be a base station deployed on land or water.

In embodiments of the present disclosure, the network device can serve a cell, and the terminal device can communicate with the network device on a transmission resource (for example, a frequency-domain resource or a spectrum resource) for the cell. The cell may be a cell corresponding to the network device (for example, a base station). The cell may belong to a macro base station, or may belong to a base station corresponding to a small cell. The small cell may include: a metro cell, a micro cell, a pico cell, a femto cell, and the like. These small cells are characterized by small coverage and low transmission power and are adapted to provide data transmission service with high-rate.

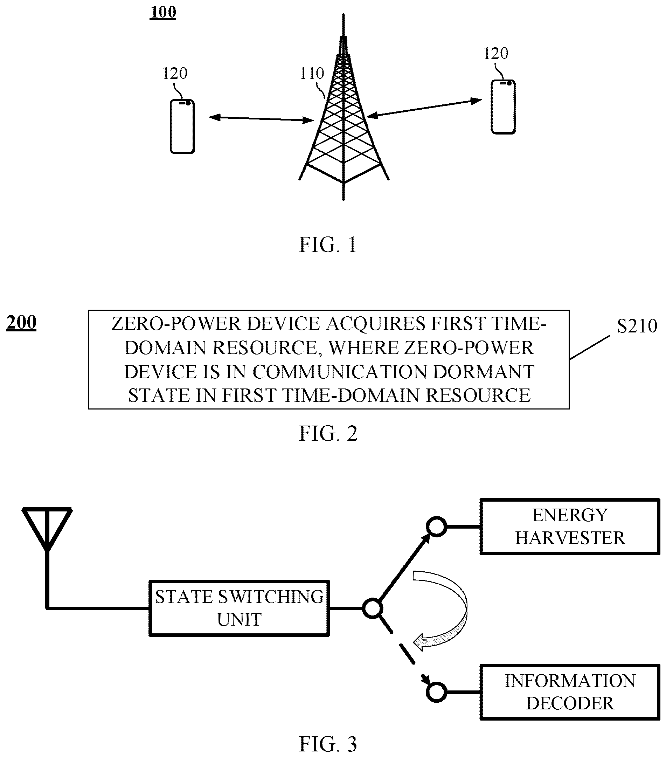

Exemplarily, FIG. 1 illustrates a communication system 100 to which embodiments of the present disclosure are applicable. The communication system 100 may include a network device 110. The network device 110 may be a device for communicating with a terminal device 120 (also referred to as "communication terminal" or "terminal"). The network device 110 can provide a communication coverage for a specific geographical area and communicate with terminal devices in the coverage area.

FIG. 1 exemplarily illustrates one network device and two terminal devices. Optionally, the communication system 100 may also include multiple network devices, and there may be other quantities of terminal devices in a coverage area of each of the network devices. Embodiments of the present disclosure are not limited in this regard.

In some embodiments, the communication system 100 may further include other network entities such as a network controller, a mobility management entity (MME), or the like, and embodiments of the present disclosure are not limited in this regard.

It may be understood that, in embodiments of the present disclosure, a device with communication functions in a network/system may be referred to as a "communication device". Taking the communication system 100 illustrated in FIG. 1 as an example, the communication device may include the network device 110 and the terminal device(s) 120 that have communication functions. The network device 110 and the terminal device(s) 120 may be the devices described above and will not be elaborated again herein. The communication device may further include other devices such as a network controller, an MME, or other network entities in the communication system 100, and embodiments of the present disclosure are not limited in this regard.

It may be understood that, the terms "system" and "network" herein are usually used interchangeably throughout this disclosure. The term "and/or" herein only describes an association relationship between associated objects, which means that there may be three relationships. For example, *A* and/or *B* may mean *A* alone, both *A* and *B* exist, and *B* alone. In addition, the character "/" herein generally indicates that the associated objects are in an "or" relationship.

Terms used in the embodiments of the present disclosure are merely intended for explaining embodiments of the present disclosure rather than limiting the present disclosure. The terms "first", "second", "third", "fourth", and the like used in the specification, the claims, and the accompany drawings of the present disclosure are used to distinguish different objects rather than describe a particular order. In addition, the terms "include", "comprise", and "have" as well as variations thereof are intended to cover non-exclusive inclusion.

It may be understood that, "indication" referred to in embodiments of the present disclosure may be a direct indication, may be an indirect indication, or may mean that there is an association relationship. For example, *A* indicates *B* may mean that *A* directly indicates *B,* for instance, *B* can be obtained according to *A*; may mean that *A* indirectly indicates *B,* for instance, *A* indicates *C,* and *B* can be obtained according to *C;* or may mean that that there is an association relationship between *A* and *B.*

In the elaboration of embodiments of the present disclosure, the term "correspondence" may mean that there is a direct or indirect correspondence between the two, may mean that there is an association between the two, or may mean a relationship of indicating and indicated or configuring and configured, etc.

In embodiments of the present disclosure, the "pre-defined" or "pre-configured" may be implemented by pre-saving a corresponding code or table in a device (for example, including the terminal device and the network device) or in other manners that can be used for indicating related information, and the present disclosure is not limited in this regard. For example, the "pre-defined" may mean defined in a protocol.

In embodiments of the present disclosure, the "protocol" may refer to a communication standard protocol, which may include, for example, an LTE protocol, an NR protocol, a Wi-Fi protocol, or an evolution of a protocol related to other communication systems, and the protocol type is not limited in the present disclosure.

With the increase of 5G industry applications, the types and application scenarios of connected objects are becoming more diverse, and relatively high requirements will also be imposed on the price and power consumption of communication terminals. The application of battery-free, low-cost passive IoT devices has become a key technology for cellular IoT, enriching the types and number of terminals connected to 5G networks and truly realizing the interconnection of everything. Passive IoT devices can be based on existing zero-power devices, such as radio frequency identification (RFID) technology, and further extended on this basis to be applicable to cellular IoT.

To facilitate better understanding of the embodiments of the present disclosure, the classification of zero-power devices involved in the present disclosure is described below.

Optionally, based on the energy source and usage mode of zero-power devices, zero-power devices may be classified into passive zero-power devices, semi-passive zero-power devices, and active zero-power devices.

### 1) Passive zero-power device

A zero-power device does not require an internal battery. When the zero-power device is close to a network device (such as a reader of an RFID system), the zero-power device is within the near-field range formed by the radiation of an antenna(s) of the network device. Therefore, an antenna(s) of the zero-power device generates an induced current through electromagnetic induction, and the induced current drives a low-power chip circuit of the zero-power device. This enables the demodulation of a signal on a forward link (downlink, a link from the network device to the zero-power device) and the modulation of a signal on a backward link (uplink, a link from the zero-power device to the network device). For the backscattering link, the zero-power device performs signal transmission using backscattering.

It may be seen that, the passive zero-power device does not require a built-in battery to drive either the forward link or the reverse link, and is thus a truly zero-power device.

The passive zero-power device do not require a battery, and an RF circuit and a baseband circuit therein are very simple, for example, components such as a low-noise amplifier (LNA), a power amplifier (PA), a crystal oscillator, an analog-to-digital conversion (ADC) are not required. Therefore, the passive zero-power device has many advantages, such as small size, light weight, very low cost, and long service life.

### 2) Semi-passive zero-power device

A semi-passive zero-power device is also not equipped with a conventional battery, but it can use an RF energy harvesting module to harvest energy from radio waves, or use a solar/optical/heat/kinetic energy harvesting module to harvest energy, and store the harvested energy in an energy storage unit (such as a capacitor). After the energy storage unit obtains energy, the low-power chip circuit of the zero-power device can be driven. This enables the demodulation of a signal on the forward link and the modulation of a signal on the backward link. For the backscattering link, the zero-power device performs signal transmission using backscattering.

It may be seen that, the semi-passive zero-power device does not require a built-in battery to drive either the forward link or the reverse link. Although energy stored in the capacitor is used during operation, the energy originates from the radio energy harvested by the energy harvesting module, and therefore, the semi-passive zero-power device is also a truly zero-power device.

The semi-passive zero-power device inherits many advantages of the passive zero-power device, and thus has many advantages such as small size, light weight, very low cost, and long service life.

### 3) Active zero-power device

In some scenarios, the zero-power device used may also be an active zero-power device. This type of terminal may be equipped with a built-in battery (a conventional battery such as a dry battery, or a rechargeable lithium battery, etc.). The battery is used to drive the low-power chip circuit of the zero-power device. This enables the demodulation of a signal on the forward link and the modulation of a signal of the backward link. However, for the backscattering link, the zero-power device performs signal transmission using backscattering. Therefore, the zero-power feature of such terminals is mainly reflected in that signal transmission on the reverse link does not consume power from the terminal itself but uses backscattering. Although the active zero-power device uses a battery, due to the adoption of ultra-low-power communication technology, power consumption of the active zero-power device is very low. Therefore, compared with existing technologies, the battery life can be significantly improved.

The active zero-power device uses a built-in battery to supply power to an RFID chip, thereby increasing the read/write range of a tag and improving the reliability of communication. Therefore, the active zero-power device can be applied in scenarios with relatively high requirements for communication range, read latency, and so on.

To facilitate a better understanding of the embodiments of the present disclosure, ambient power-enabled devices involved in the present disclosure are described as follows.

In NR systems and Wi-Fi systems, battery-free and low-cost devices can support the low-cost large-scale deployment and maintenance-free operation of IoT devices. Current standards are studying how to support ambient power (AMP)-enabled IoT devices, referred to as ambient IoT or AMP IoT devices, in NR systems and Wi-Fi systems. The energy required for the operation of such devices comes from ambient energy harvesting, where the ambient energy may originate from radio signals, solar energy, heat energy, and the like. Such devices are similar to passive or semi-passive devices in zero-power communications.

To facilitate a better understanding of the embodiments of the present disclosure, the problem that can be solved by the present disclosure is described as follows.

In practical network deployment, a technical bottleneck faced by passive zero-power communication technology is that a coverage distance of a forward link is limited. The main reason is that a communication distance of the forward link is limited by a signal strength of a radio signal reaching the zero-power device. Based on existing implementation processes, generally, a zero-power device needs to consume power of 10 microwatts (µW) to drive a low-power circuit. This means that a power of a signal reaching the zero-power device needs to be at least -20 dBm. Restricted by radio regulatory requirements, a transmission power of a network device is generally not too high. For example, in an industrial scientific medical (ISM) band where RFID operates, the maximum transmission power is 30 dBm. Therefore, considering the radio propagation loss in space, a transmission distance of passive zero-power devices is generally within the range of 10 meters to several tens of meters.

Semi-passive zero-power devices have the potential to significantly extend communication distances. This is because the semi-passive zero-power device can use an RF energy harvesting module to harvest radio waves, thereby continuously harvesting radio energy and storing the radio energy in an energy storage unit. After the energy storage unit obtains sufficient energy, a low-power circuit can be driven to demodulate a signal on the forward link and modulate a signal on a reverse link. Therefore, in this case, the semi-passive zero-power device is equivalent to an active terminal, and its downlink coverage depends on a receiver sensitivity for a downlink signal (typically much lower than an RF energy harvesting threshold). Based on current processes, the energy harvesting module can perform energy harvesting and input electrical energy into the energy storage unit when a strength of a received radio signal is not lower than -30 dBm. Therefore, the coverage of the forward link of the semi-passive zero-power device depends on the RF energy harvesting threshold (e.g., -30 dBm). Compared with a passive zero-power device, a strength of a received radio signal is relaxed from -20 dBm to -30 dBm, and thus a link budget gain of 10 dB can be obtained, and accordingly downlink coverage can be improved by more than three times.

However, while improving the coverage of the forward link, the semi-passive zero-power device also faces the problem of reduced charging efficiency. As the received signal strength decreases, the amount of energy that the energy harvesting module can harvest and that can be stored decreases significantly. For example, when the received signal strength is -30 dBm, i.e., 1 microwatt, the amount of energy that can be harvested and stored is far less than 1 microwatt (the energy harvesting efficiency is significantly reduced). On the other hand, as mentioned above, the low-power circuit of the zero-power device may require an average power consumption of 10 µW. Therefore, for the semi-passive zero-power device, a relatively long duration of energy harvesting is required to support communication for a short time. No matter whether the zero-power device is in a powerless state or in an energy harvesting state, the zero-power device cannot communicate with the network or other devices. It is assumed here that the zero-power device cannot perform energy harvesting and communication simultaneously. Therefore, because the zero-power device needs to continuously perform, within a certain time window, blind detection of signals that may be sent to the zero-power device by the network device or other terminals communicating with the zero-power device, this can lead to power waste, and continuous energy harvesting cannot be performed by the zero-power device during this period.

Based on the above problems, the present disclosure proposes a zero-power communication solution, in which the zero-power device is in a communication dormant state within a first time-domain resource, thereby enabling the zero-power device to perform energy harvesting more efficiently within the first time-domain resource, while avoiding power consumption that would otherwise be caused by the zero-power device performing, within the first time-domain resource, continuous blind detection of signals that may be sent to the zero-power device by a device communicating with the zero-power device.

To facilitate an understanding of the technical solutions of the embodiments of the present disclosure, the technical solutions of the present disclosure are described in detail below through specific embodiments. The following relevant technologies as optional solutions can be combined arbitrarily with the technical solutions of the embodiments of the present disclosure, all of which fall within the protection scope of the embodiments of the present disclosure. The embodiments of the present disclosure include at least part of the following content.

FIG. 2 is a schematic flow chart of a method 200 for wireless communication according to embodiments of the present disclosure. As illustrated in FIG. 2, the method 200 for wireless communication may include at least part of the following.

S210, a zero-power device acquires a first time-domain resource, where the zero-power device is in a communication dormant state within the first time-domain resource.

It may be understood that, FIG. 2 illustrates steps or operations of the method 200 for wireless communication, but these steps or operations are merely examples, and other operations or variations of the operations in FIG. 2 may also be performed in the embodiments of the present disclosure.

In the embodiments of the present disclosure, the zero-power device has a simple structure, low complexity, and low cost, and can support energy harvesting of ambient energy (for example, light energy, heat energy, radio frequency energy, mechanical energy, kinetic energy, etc.) to acquire the energy required for communication. The zero-power device may support backscattering communication. Some zero-power devices may also support active transmission communication. From the perspective of energy harvesting, the zero-power device may also be referred to as an energy harvesting device. A power-supplying device refers to a device that can send a power-supplying signal, which may be a device that can also send a communication signal, such as a base station, an AP, a station (STA), and the like, or may be a separate power-supplying device.

In the embodiments of the present disclosure, the zero-power device may also be referred to as an "ambient power enabled IoT device" or an "ambient IoT device." Specifically, the ambient IoT device refers to an IoT device that can use various types of ambient energy, such as radio frequency energy, light energy, solar energy, heat energy, mechanical energy, etc. The ambient IoT device may have no energy storage capacity or may have very limited energy storage capacity (for example, using a capacitor with a capacity of tens of microfarads (µF)).

In the embodiments of the present disclosure, the zero-power device may be applied to Wi-Fi and/or cellular networks.

To improve coverage of a forward link, the zero-power device described in the embodiments of the present disclosure may be a semi-passive zero-power device.

It may be noted that, operations of the semi-passive zero-power device depends on energy harvesting. For example, the semi-passive zero-power device needs to consume a certain amount of energy to perform data reading, data reporting, and data receiving. However, a device communicating with the zero-power device or a power-supplying device does not know an energy storage state and the current communication state of the zero-power device. In the embodiments of the present disclosure, the zero-power device is in the communication dormant state within the first time-domain resource. For the device communicating with the zero-power device or the power-supplying device, the state of the zero-power device within the first time-domain resource is explicit. Thus, the zero-power device can perform energy harvesting more efficiently within the first time-domain resource, while avoiding power consumption that would otherwise be caused by the zero-power device performing, within the first time-domain resource, continuous blind detection of signals that may be sent to the zero-power device by the device communicating with the zero-power device.

In some embodiments, the zero-power device being in the communication dormant state within the first time-domain resource includes that the zero-power device does not expect to receive communication signals within the first time-domain resource and/or does not send communication signals within the first time-domain resource.

In the embodiments of the present disclosure, the zero-power device being in the communication dormant state within the first time-domain resource may also be referred to as the zero-power device being in a non-communication state within the first time-domain resource, a non-receiving state within the first time-domain resource, an energy harvesting state within the first time-domain resource, or a dormant state within the first time-domain resource, etc. The behavior of the zero-power device within the first time-domain resource is not limited in the present disclosure, except that the zero-power device may refrain from receiving and demodulating signals.

It may be noted that, for the zero-power device that can perform energy harvesting through a radio frequency signal, a radio frequency signal received by a receiver of the zero-power device can generally achieve only one of information demodulation and energy harvesting. That is, before receiving a radio frequency signal, the zero-power device needs to determine whether a radio frequency signal is for information demodulation or for energy harvesting at current time. If the current energy storage state allows, the zero-power device may use the stored energy for information demodulation without performing energy harvesting, or may continue energy harvesting. The processing for a radio frequency signal by the zero-power device depends on whether the current state of the zero-power device is an energy harvesting state or a communication state. These two states are often separated from each other in time, that is, they are performed at different times. There are also approaches where energy harvesting and communication can be performed simultaneously, for example, a received signal power is split into a part used for information demodulation and a part used for energy harvesting, or through different antennas or spatial signals, a radio frequency signal for energy harvesting and a radio frequency signal for information demodulation are respectively received. However, these approaches require a receiver with relatively high complexity and are not suitable for zero-power devices with ultra-low complexity. Therefore, in the embodiments of the present disclosure, by configuring the first time-domain resource, the zero-power device can switch between the energy harvesting state and the communication state. As illustrated in FIG. 3, the zero-power device determines, based on the related configuration of the first time-domain resource, to switch between energy harvesting and information demodulation at different times.

During the communication between the zero-power device and a peer device, the zero-power device needs to detect a channel of the peer device at an agreed time to receive signals that may be sent to the zero-power device by the peer device. For example, in a Wi-Fi system, the zero-power device needs to receive beacon frames periodically or detect signals sent to the zero-power device by an AP at a target wake time (TWT). In another example, in cellular systems, such as 5G and future 6G systems, the zero-power device needs to detect physical layer control information, such as downlink control information (DCI), according to a certain search space. In this process, if the zero-power device and the peer device do not need to communicate continuously, the zero-power device will consume power due to signal reception. Moreover, during this process, continuous energy harvesting cannot be performed, which significantly adversely impacts the efficiency of energy harvesting.

Whether the device communicating with the zero-power device needs to send a signal to the zero-power device is predictable, and especially for a communication device that supports communication with both a zero-power device and a traditional terminal, an air interface technology used for communication between the communication device and the traditional terminal is different from an air interface technology used for communication between the communication device and the zero-power device. During the communication between the communication device and the traditional terminal, signals sent by the communication device cannot be demodulated by the zero-power device. In this case, the zero-power device can use these signals for energy harvesting. In some embodiments, the first time-domain resource may be configured by the device communicating with the zero-power device or may be defined by a protocol. In a case where the first time-domain resource is configured by the device communicating with the zero-power device, no communication will occur between the communication device and the zero-power device within the first time-domain resource, and the zero-power device can perform energy harvesting within the first time-domain resource without frequently detecting communication signals.

In some embodiments, the first time-domain resource is determined based on at least one of: an energy harvesting capability of the zero-power device, an energy harvesting manner of the zero-power device, an energy storage capacity of the zero-power device, or ambient energy information of an environment where the zero-power device is located. Of course, other factors may also be considered for determining the first time-domain resource, and the embodiments of the present disclosure are not limited thereto.

Specifically, for example, the energy harvesting capability of the zero-power device may be represented by an amount of energy harvested per unit time. When the zero-power device has a relatively high energy harvesting capability, a relatively short first time-domain resource may be configured or preset. When the zero-power device has a relatively low energy harvesting capability, a relatively long first time-domain resource may be configured or preset.

Specifically, for example, in a case where the zero-power device can use multiple energy harvesting manners (for example, can simultaneously harvest radio frequency energy, light energy, heat energy, wind energy, etc.), a relatively short first time-domain resource may be configured or preset. In a case where the zero-power device can only use fewer energy harvesting manners (for example, can harvest only radio frequency energy), a relatively long first time-domain resource may be configured or preset.

Specifically, for example, in a case where the zero-power device has a relatively low energy storage capacity, a relatively short first time-domain resource may be configured or preset. In a case where the zero-power device has a relatively high energy storage capacity, a relatively long first time-domain resource may be configured or preset.

Specifically, for example, assuming that the zero-power device can harvest light energy from the surrounding environment, in a case where the light energy in the environment where the zero-power device is located is relatively high, a relatively short first time-domain resource may be configured or preset, and in a case where the light energy in the environment where the zero-power device is located is relatively low, a relatively long first time-domain resource may be configured or preset.

In some embodiments, the first time-domain resource is a periodic resource, or the first time-domain resource is an aperiodic resource.

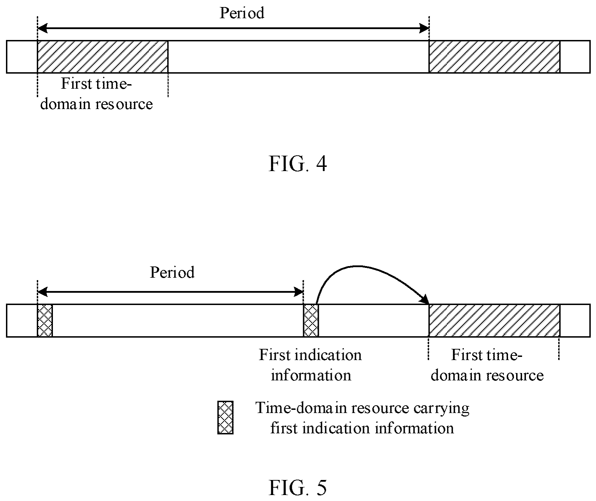

For example, the first time-domain resource is a periodic resource. As illustrated in FIG. 4, in each period, the first time-domain resource is included. Within the first time-domain resource, the zero-power device is in the communication dormant state and can perform energy harvesting.

In some embodiments, in a case where the first time-domain resource is a periodic resource, the period information for the first time-domain resource may be defined by a protocol or configured by the network.

In some embodiments, a frequency-domain resource corresponding to the first time-domain resource includes at least one of: a frequency-domain resource for the zero-power device or a frequency-domain resource for another device (or other devices).

Specifically, in the embodiment, the frequency-domain resource corresponding to the first time-domain resource may include the frequency-domain resource corresponding to the other device (such as a traditional terminal), so that the zero-power device can perform energy harvesting using the frequency-domain resource corresponding to the other device (such as a traditional terminal), thereby improving the efficiency of energy harvesting.

In some embodiments, the zero-power device performs energy harvesting within the first time-domain resource.

In some embodiments, the zero-power device performs energy harvesting within the first time-domain resource based on at least one of: a power-supplying signal for the zero-power device, a communication signal for the zero-power device, or a communication signal for another device (or other devices). Optionally, the zero-power device can also harvest various types of ambient energy, such as light energy, solar energy, heat energy, and mechanical energy, within the first time-domain resource.

Specifically, in the embodiment, because the zero-power device is in the communication dormant state within the first time-domain resource, the zero-power device can directly treat all signals within the first time-domain resource as power-supplying signals, thereby improving the efficiency of energy harvesting.

In some embodiments, a signal modulation and demodulation scheme for the zero-power device is different from a signal modulation and demodulation scheme for the other device (such as a traditional terminal), and/or an air interface technology used by the zero-power device is different from an air interface technology used by the other device (such as a traditional terminal).

In some embodiments, in the above S210, the zero-power device receives first indication information, where the first indication information indicates at least one of: a position of the first time-domain resource, a length of the first time-domain resource, a frequency-domain resource corresponding to the first time-domain resource, or period information for the first time-domain resource.

Specifically, the zero-power device receives the first indication information sent by a communication device, where the communication device is one of: an AP, an STA, a base station, a TRP, and a terminal device. That is, in the embodiment, the communication device may configure the first time-domain resource for the zero-power device.

In some embodiments, the first indication information is indication information at a granularity of a cell. That is, the first indication information is common within a cell. In other words, the first indication information is valid for all zero-power devices within the cell.

In some embodiments, the first indication information is indication information at a granularity of a zero-power device. That is, the first indication information is dedicated to a zero-power device. In other words, the first indication information is valid only for the zero-power device.

In some embodiments, the first indication information is indication information at a granularity of a zero-power-device group. That is, the first indication information is dedicated to a zero-power-device group. In other words, the first indication information is valid for all zero-power devices within the zero-power-device group.

In some embodiments, the first indication information is carried in at least one of: a frame in an authentication and/or association process in WLAN, a beacon frame in WLAN, a channel or signaling in a cellular network, or a zero-power-device dedicated signal.

Specifically, if the first time-domain resource is dynamically determined and indicated by the communication device, the first indication information needs to be carried in a corresponding signal. For example, in a Wi-Fi system, the first indication information may be carried in a beacon frame, where the first indication information indicates a time-domain resource(s) within one or more beacon intervals, and the zero-power device can perform energy harvesting with the time-domain resource(s). For example, in a cellular system, the first indication information may be carried in a corresponding control channel.

Specifically, the communication device sends the first indication information using an air interface technology used for communication with the zero-power device.

Specifically, the first indication information may indicate the frequency-domain resource corresponding to the first time-domain resource, such as a channel in a Wi-Fi system or a frequency-domain bandwidth or bandwidth part (BWP) in a cellular system, and may be a frequency-domain resource for communication with the zero-power device or may be another frequency-domain resource.

In some embodiments, a resource carrying the first indication information may be a preset or preconfigured periodic resource. As illustrated in FIG. 5, the zero-power device detects the first indication information within a time-domain resource carrying the first indication information and then obtains the position of the first time-domain resource.

In some embodiments, in the above S210, the zero-power device acquires the first time-domain resource via information defined by a protocol.

In the embodiments of the present disclosure, the energy of the zero-power device may also come from non-radio frequency energy such as solar energy, heat energy, and mechanical energy. In this case, within the first time-domain resource, the zero-power device performs corresponding ambient energy harvesting. Although non-radio frequency energy harvesting and communication can be performed simultaneously, signal reception can be omitted within the first time-domain resource to reduce power consumption.

Therefore, in the embodiments of the present disclosure, the zero-power device is in the communication dormant state within the first time-domain resource, so that the zero-power device can perform energy harvesting more efficiently within the first time-domain resource, while avoiding power consumption that would otherwise be caused by the zero-power device performing, within the first time-domain resource, continuous blind detection of signals that may be sent to the zero-power device by a device communicating with the zero-power device.

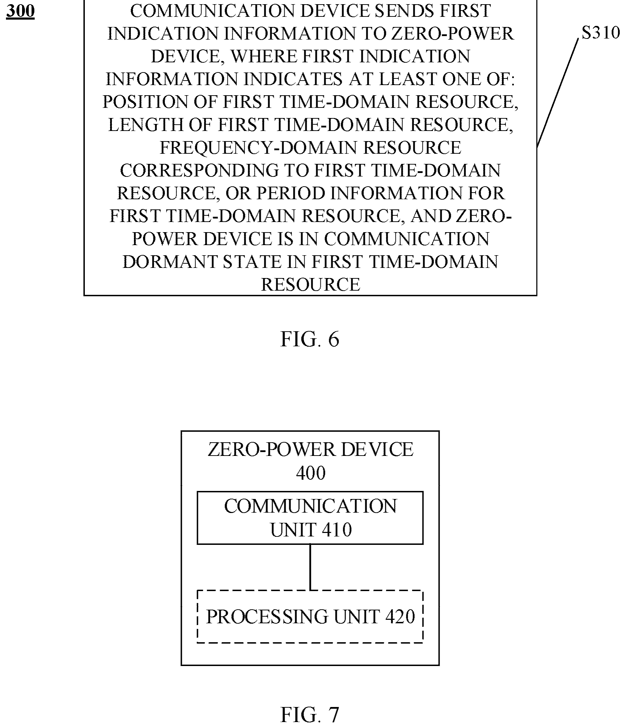

The above describes in detail the embodiments at the zero-power device side in the present disclosure with reference to FIGS. 2 to 5. The following describes in detail the embodiments at the communication device side in the present disclosure with reference to FIG. 6. It may be understood that, the embodiments at the communication device side correspond to the embodiments at the zero-power device side, and for similar illustrations, reference can be made to the embodiments at the zero-power device side.

FIG. 6 is a schematic flow chart of a method 300 for wireless communication according to embodiments of the present disclosure. As illustrated in FIG. 6, the method 300 for wireless communication may include at least part of the following.

S310, a communication device sends first indication information to a zero-power device, where the first indication information indicates at least one of: a position of a first time-domain resource, a length of the first time-domain resource, a frequency-domain resource corresponding to the first time-domain resource, or period information for the first time-domain resource, where the zero-power device is in a communication dormant state within the first time-domain resource.

It may be understood that, FIG. 6 illustrates steps or operations of the method 300 for wireless communication. However, these steps or operations are merely examples. Other operations or variations of the operations in FIG. 6 may also be performed in the embodiments of the present disclosure.

In some embodiments, the communication device is one of: an AP, an STA, a base station, a TRP, and a terminal device.

In some embodiments, the zero-power device being in the communication dormant state within the first time-domain resource includes that the zero-power device does not expect to receive communication signals within the first time-domain resource, and/or the zero-power device does not send communication signals within the first time-domain resource.

In some embodiments, the first time-domain resource is determined based on at least one of: an energy harvesting capability of the zero-power device, an energy harvesting manner of the zero-power device, an energy storage capacity of the zero-power device, or ambient energy information of an environment where the zero-power device is located.

In some embodiments, the first time-domain resource is a periodic resource, or the first time-domain resource is an aperiodic resource.

In some embodiments, the frequency-domain resource corresponding to the first time-domain resource includes at least one of: a frequency-domain resource for the zero-power device or a frequency-domain resource corresponding to another device.

In some embodiments, the first time-domain resource is used by the zero-power device to perform energy harvesting.

In some embodiments, the zero-power device performs energy harvesting within the first time-domain resource based on at least one of: a power-supplying signal for the zero-power device, a communication signal for the zero-power device, or a communication signal for another device.

In some embodiments, a signal modulation and demodulation scheme for the zero-power device is different from a signal modulation and demodulation scheme for the other device, and/or an air interface technology used by the zero-power device is different from an air interface technology used by the other device.

In some embodiments, the first indication information is indication information at a granularity of a cell, or the first indication information is indication information at a granularity of a zero-power device, or the first indication information is indication information at a granularity of a zero-power-device group.

In some embodiments, the first indication information is carried in at least one of: a frame in an authentication and/or association process in WLAN, a beacon frame in WLAN, a channel or signaling in a cellular network, or a zero-power-device dedicated signal.

Therefore, in the embodiments of the present disclosure, the zero-power device is in the communication dormant state within the first time-domain resource, so that the zero-power device can perform energy harvesting more efficiently within the first time-domain resource, while avoiding power consumption that would otherwise be caused by the zero-power device performing, within the first time-domain resource, continuous blind detection of signals that may be sent to the zero-power device by a device communicating with the zero-power device..

The above describes in detail the method embodiments of the present disclosure with reference to FIGS. 2 to 6. The following describes in detail the device embodiments of the present disclosure with reference to FIGS. 7 to 11. It may be understood that, the device embodiments correspond to the method embodiments, and for similar illustrations, reference can be made to the method embodiments.

FIG. 7 is a schematic block diagram of a zero-power device 400 according to embodiments of the present disclosure. As illustrated in FIG. 7, the zero-power device 400 includes a communication unit 410 configured to acquire a first time-domain resource, where the zero-power device is in a communication dormant state within the first time-domain resource.

In some embodiments, the zero-power device being in the communication dormant state within the first time-domain resource includes: the zero-power device not expecting to receive communication signals within the first time-domain resource, and/or the zero-power device not transmitting communication signals within the first time-domain resource.

In some embodiments, the first time-domain resource is determined based on at least one of: an energy harvesting capability of the zero-power device, an energy harvesting manner of the zero-power device, an energy storage capacity of the zero-power device, or ambient energy information of an environment where the zero-power device is located.

In some embodiments, the first time-domain resource is a periodic resource, or the first time-domain resource is an aperiodic resource.

In some embodiments, a frequency-domain resource corresponding to the first time-domain resource includes at least one of: a frequency-domain resource for the zero-power device or a frequency-domain resource for another device.

In some embodiments, the zero-power device 400 further includes a processing unit 420 configured to perform energy harvesting within the first time-domain resource.

In some embodiments, the zero-power device performs energy harvesting within the first time-domain resource based on at least one of: a power-supplying signal for the zero-power device, a communication signal for the zero-power device, or a communication signal for another device.

In some embodiments, a signal modulation and demodulation scheme for the zero-power device is different from a signal modulation and demodulation scheme for the other device, and/or an air interface technology used by the zero-power device is different from an air interface technology used by the other device.

In some embodiments, the communication unit 410 is specifically configured to receive first indication information, where the first indication information indicates at least one of: a position of the first time-domain resource, a length of the first time-domain resource, a frequency-domain resource corresponding to the first time-domain resource, or period information for the first time-domain resource.

In some embodiments, the first indication information is indication information at a granularity of a cell, or the first indication information is indication information at a granularity of a zero-power device, or the first indication information is indication information at a granularity of a zero-power-device group.

In some embodiments, the first indication information is carried in at least one of: a frame in an authentication and/or association process in a WLAN, a beacon frame in the WLAN, a channel or signaling in a cellular network, or a zero-power-device dedicated signal.

In some embodiments, the communication unit 410 is specifically configured to acquire the first time-domain resource via information defined by a protocol.

In some embodiments, the communication unit may be a communication interface or a transceiver, or an input/output interface of a communication chip or a system-on-chip. The processing unit may be one or more processors.

It may be understood that, the zero-power device 400 according to the embodiments of the present disclosure corresponds to the zero-power device in the method embodiments of the present disclosure, and the above and other operations and/or functions of each unit in the zero-power device 400 are respectively configured to implement the corresponding processes of the zero-power device in the method 200 as illustrated in FIG. 2, which are not repeated herein for brevity.

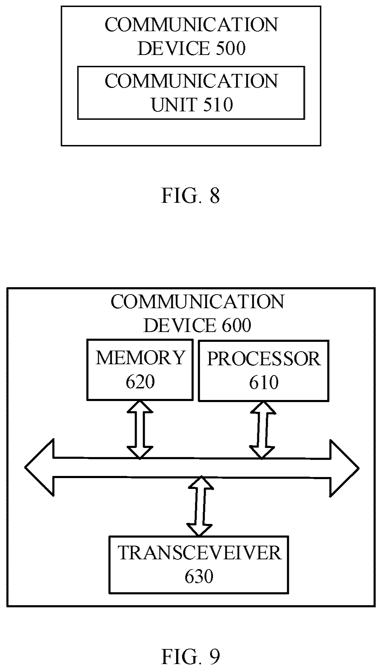

FIG. 8 is a schematic block diagram of a communication device 500 according to embodiments of the present disclosure. As illustrated in FIG. 8, the communication device 500 includes a communication unit 510 configured to send first indication information to a zero-power device, where the first indication information indicates at least one of: a position of the first time-domain resource, a length of the first time-domain resource, a frequency-domain resource corresponding to the first time-domain resource, or period information for the first time-domain resource. The zero-power device is in a communication dormant state within the first time-domain resource.

In some embodiments, the zero-power device being in the communication dormant state within the first time-domain resource includes: the zero-power device not expecting to receive communication signals within the first time-domain resource, and/or the zero-power device not sending communication signals within the first time-domain resource.

In some embodiments, the first time-domain resource is determined based on at least one of: an energy harvesting capability of the zero-power device, an energy harvesting manner of the zero-power device, an energy storage capacity of the zero-power device, or ambient energy information of an environment where the zero-power device is located.

In some embodiments, the first time-domain resource is a periodic resource, or the first time-domain resource is an aperiodic resource.

In some embodiments, a frequency-domain resource corresponding to the first time-domain resource includes at least one of: a frequency-domain resource for the zero-power device or a frequency-domain resource for another device.

In some embodiments, the first time-domain resource is used by the zero-power device to perform energy harvesting.

In some embodiments, the zero-power device performs energy harvesting within the first time-domain resource based on at least one of: a power-supplying signal for the zero-power device, a communication signal for the zero-power device, or a communication signal for another device.

In some embodiments, a signal modulation and demodulation scheme for the zero-power device is different from a signal modulation and demodulation scheme for the other device, and/or an air interface technology used by the zero-power device is different from an air interface technology used by the other device.

In some embodiments, the first indication information is indication information at a granularity of a cell, or the first indication information is indication information at a granularity of a zero-power device, or the first indication information is indication information at a granularity of a zero-power-device group.

In some embodiments, the first indication information is carried in at least one of: a frame in an authentication and/or association process in a WLAN, a beacon frame in the WLAN, a channel or signaling in a cellular network, or a zero-power-device dedicated signal.

In some embodiments, the communication device is one of: an AP, a STA, a base station, a TRP, and a terminal device.

In some embodiments, the communication unit may be a communication interface or a transceiver, or an input/output interface of a communication chip or a system-on-chip. The processing unit may be one or more processors.

It may be understood that, the zero-power device 500 according to the embodiments of the present disclosure corresponds to the communication device in the method embodiments of the present disclosure, and the above and other operations and/or functions of each unit in the communication device 500 are respectively configured to implement the corresponding processes of the communication in the method 300 as illustrated in FIG. 6, which are not repeated herein for brevity.

FIG. 9 is a schematic structural diagram of a communication device 600 according to embodiments of the present disclosure. As illustrated in FIG. 9, the communication device 600 includes a processor 610, where the processor 610 may invoke and run a computer program from a memory to implement the method in the embodiments of the present disclosure.

In some embodiments, as illustrated in FIG. 9, the communication device 600 may further include a memory 620. The processor 610 may invoke and run a computer program from the memory 620 to implement the method in the embodiments of the present disclosure. The memory 620 may be a separate device independent of the processor 610 or may be integrated into the processor 610.

In some embodiments, as illustrated in FIG. 9, the communication device 600 may further include a transceiver 630. The processor 610 may control the transceiver 630 to communicate with other devices, specifically to send information or data to other devices or to receive information or data sent by other devices. The transceiver 630 may include a transmitter and a receiver. The transceiver 630 may further include one or more antennas.

In some embodiments, the processor 610 may implement the functions of a processing unit in a zero-power device, or the processor 610 may implement the functions of a processing unit in a communication device. For brevity, details are not repeated herein.

In some embodiments, the transceiver 630 may implement the functions of a communication unit in the zero-power device. For brevity, details are not repeated herein.

In some embodiments, the transceiver 630 may implement the functions of a communication unit in the communication device. For brevity, details are not repeated herein.

In some embodiments, the communication device 600 may specifically be the communication device of the embodiments of the present disclosure, and the communication device 600 may implement corresponding processes performed by the communication device in each method of the embodiments of the present disclosure. For brevity, details are not repeated herein.

In some embodiments, the communication device 600 may specifically be the zero-power device of the embodiments of the present disclosure, and the communication device 600 may implement corresponding processes performed by the zero-power device in each method of the embodiments of the present disclosure. For brevity, details are not repeated herein.

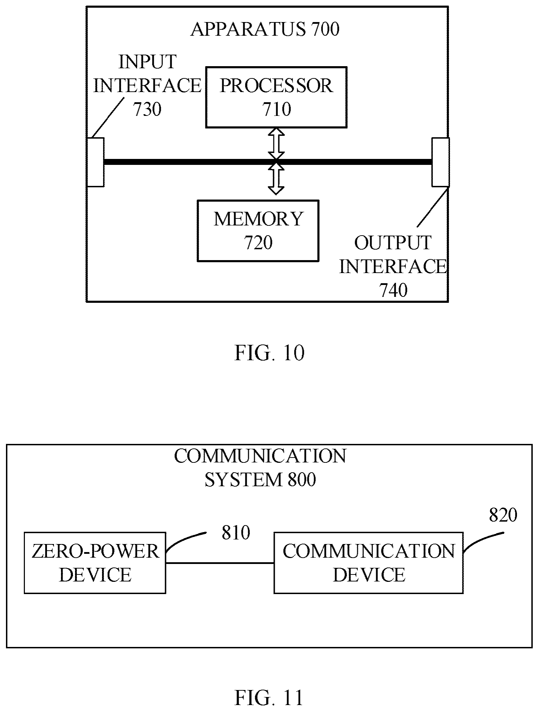

FIG. 10 is a schematic structural diagram of an apparatus according to embodiments of the present disclosure. As illustrated in FIG. 10, the apparatus 700 includes a processor 710, where the processor 710 may invoke and run a computer program from a memory to implement the method in the embodiments of the present disclosure.

In some embodiments, as illustrated in FIG. 10, the apparatus 700 may further include a memory 720. The processor 710 may invoke and run a computer program from the memory 720 to implement the method in the embodiments of the present disclosure. The memory 720 may be a separate device independent of the processor 710 or may be integrated into the processor 710.

In some embodiments, the processor 710 may implement the functions of a processing unit in a zero-power device, or the processor 710 may implement the functions of a processing unit in a communication device. For brevity, details are not repeated herein.

In some embodiments, the apparatus 700 may further include an input interface 730. The processor 710 may control the input interface 730 to communicate with other devices or chips, specifically to acquire information or data sent by other devices or chips. Optionally, the processor 710 may be located inside or outside a chip.

In some embodiments, the input interface 730 may implement the functions of a communication unit in the zero-power device, or the input interface 730 may implement the functions of a communication unit in the communication device.

In some embodiments, the apparatus 700 may further include an output interface 740. The processor 710 may control the output interface 740 to communicate with other devices or chips, specifically to output information or data to other devices or chips. Optionally, the processor 710 may be located inside or outside a chip.

In some embodiments, the output interface 740 may implement the functions of a communication unit in the zero-power device, or the output interface 740 may implement the functions of a communication unit in the communication device.

In some embodiments, the apparatus may be applied to the communication device in the embodiments of the present disclosure, and the apparatus may implement corresponding processes performed by a communication device in each method of the embodiments of the present disclosure. For brevity, details are not repeated herein.

In some embodiments, the apparatus may be applied to the zero-power device in the embodiments of the present disclosure, and the apparatus may implement corresponding processes performed by the zero-power device in each method of the embodiments of the present disclosure. For brevity, details are not repeated herein.

In some embodiments, the apparatus mentioned in the embodiments of the present disclosure may also be a chip, for example, a system-on-chip, a system chip, a chip system, or a chip-on-system.

FIG. 11 is a schematic block diagram of a communication system 800 according to embodiments of the present disclosure. As illustrated in FIG. 11, the communication system 800 includes a zero-power device 810 and a communication device 820. The zero-power device 810 may be configured to implement the corresponding functions performed by the zero-power device in the above methods, and the communication device 820 may be configured to implement the corresponding functions performed by the communication device in the above methods. For brevity, details are not repeated herein.

It may be understood that, the processor in embodiments of the present disclosure may be an integrated circuit chip with signal processing capabilities. During implementation, each step of the foregoing method embodiments may be completed by an integrated logic circuit of hardware in the processor or an instruction in the form of software. The processor may be a general-purpose processor, a digital signal processor (DSP), an application specific integrated circuit (ASIC), a field programmable gate array (FPGA), or other programmable logic devices, discrete gates or transistor logic devices, discrete hardware components. The methods, steps, and logic blocks disclosed in embodiments of the present disclosure can be implemented or executed. The general-purpose processor may be a microprocessor, or the processor may be any conventional processor or the like. The steps of the method disclosed in embodiments of the present disclosure may be directly implemented by a hardware decoding processor, or may be performed by hardware and software modules in the decoding processor. The software module can be located in a storage medium well known in the art such as a random access memory (RAM), a flash memory, a read only memory (ROM), a programmable ROM (PROM), or an electrically erasable programmable memory, a register, and the like. The storage medium is located in the memory. The processor can read the information in the memory, and complete the steps of the method described above with the hardware thereof.

It may be understood that, the memory in embodiments of the present disclosure may be a volatile memory or a non-volatile memory, or may include both the volatile memory and the non-volatile memory. The non-volatile memory may be a ROM, a PROM, an erasable PROM (EPROM), an electrically EPROM (EEPROM), or flash memory. The volatile memory can be a RAM that acts as an external cache. By way of example but not limitation, many forms of RAM are available, such as a static RAM (SRAM), a dynamic RAM (DRAM), a synchronous DRAM (SDRAM), a double data rate SDRAM (DDR SDRAM), an enhanced SDRAM (ESDRAM), a synchlink DRAM (SLDRAM), and a direct rambus RAM (DR RAM). It may be noted that, the memory of the systems and methods described in the present disclosure is intended to include, but is not limited to, these and any other suitable types of memory.

It may be understood that, the memory above is intended for illustration rather than limitation. For example, the memory in embodiments of the present disclosure may also be an SRAM, a DRAM, an SDRAM, a DDR SDRAM, an ESDRAM, an SLDRAM, a DR RAM, etc. In other words, the memory in embodiments of the present disclosure is intended to include, but is not limited to, these and any other suitable types of memory.

Embodiments of the present disclosure further provide a computer-readable storage medium. The computer-readable storage medium is configured to store computer programs.

In some embodiments, the computer-readable storage medium may be applied to the communication device in embodiments of the present disclosure, and the computer programs can enable a computer to execute corresponding operations implemented by the communication device in various methods in embodiments of the present disclosure, which will not be described again herein for the sake of brevity.

In some embodiments, the computer-readable storage medium may be applied to a zero-power device in embodiments of the present disclosure, and the computer programs can enable a a computer to execute corresponding operations implemented by the mobile terminal / terminal device in various methods in embodiments of the present disclosure, which will not be described again herein for the sake of brevity.

Embodiments of the present disclosure further provide a computer program product. The computer program product includes computer program instructions.

In some embodiments, the computer program product may be applied to the communication device in embodiments of the present disclosure, and the computer program instructions can enable a computer to execute corresponding operations implemented by the communication device in various methods in embodiments of the present disclosure, which will not be described again herein for the sake of brevity.

In some embodiments, the computer program product may be applied to a zero-power device in embodiments of the present disclosure, and the computer program instructions can enable a computer to execute corresponding operations implemented by the zero-power device in various methods in embodiments of the present disclosure, which will not be described again herein for the sake of brevity.

Embodiments of the present disclosure further provide a computer program.

In some embodiments, the computer program may be applied to the communication device in embodiments of the present disclosure. The computer program, when executed by a computer, is operable to implement corresponding operations implemented by the communication device in various methods in embodiments of the present disclosure, which will not be described again herein for the sake of brevity.

In some embodiments, the computer program may be applied to a zero-power device in embodiments of the present disclosure. The computer program, when executed by a computer, is operable to implement corresponding operations implemented by the zero-power device in various methods in embodiments of the present disclosure, which will not be described again herein for the sake of brevity.

Those of ordinary skill in the art will appreciate that units and algorithmic operations of various examples described in connection with embodiments of the present disclosure can be implemented by electronic hardware or by a combination of computer software and electronic hardware. Whether these functions are performed by means of hardware or software depends on the application and the design constraints of the associated technical solution. Those skilled in the art may use different methods with regard to each particular application to implement the described functionality, but such methods should not be regarded as lying beyond the scope of the present disclosure

It will be evident to those skilled in the art that, for the sake of convenience and brevity, in terms of the specific working processes of the foregoing systems, apparatuses, and units, reference can be made to the corresponding processes in the foregoing method embodiments, which will not be repeated herein.

It will be appreciated that the systems, apparatuses, and methods disclosed in embodiments of the present disclosure may also be implemented in various other manners. For example, the above apparatus embodiments are merely illustrative, e.g., the division of units is only a division of logical functions, and other manners of division may be available in practice, e.g., multiple units or assemblies may be combined or may be integrated into another system, or some features may be ignored or skipped. In other respects, the coupling or direct coupling or communication connection as illustrated or discussed may be an indirect coupling or communication connection through some interface, device, or unit, and may be electrical, mechanical, or otherwise.

Separated units as illustrated may or may not be physically separated. Components displayed as units may or may not be physical units, and may reside at one location or may be distributed to multiple networked units. Some or all of the units may be selectively adopted according to practical needs to achieve desired objectives of the present disclosure.

In addition, various functional units described in various embodiments of the present disclosure may be integrated into one processing unit or may be present as a number of physically separated units, and two or more units may be integrated into one.

If the functions are implemented as software functional units and sold or used as standalone products, they may be stored in a computer-readable storage medium. Based on such an understanding, the essential technical solution, or the portion that contributes to the prior art, or part of the technical solution of the present disclosure may be embodied as software products. The computer software products can be stored in a storage medium and may include multiple instructions that, when executed, can cause a computer device, e.g., a personal computer, a server, a network device, etc., to execute some or all operations of the methods described in various embodiments of the present disclosure. The above storage medium may include various kinds of media that can store program codes, such as a universal serial bus (USB) flash disk, a mobile hard drive, a ROM, a RAM, a magnetic disk, or an optical disk.

The foregoing elaborations are merely implementations of the present disclosure, but are not intended to limit the protection scope of the present disclosure. Any variation or replacement easily thought of by those skilled in the art within the technical scope disclosed in the present disclosure shall belong to the protection scope of the present disclosure. Therefore, the protection scope of the present disclosure shall be subject to the protection scope of the claims.

## Claims

1. A method for wireless communication, comprising:
acquiring, by a zero-power device, a first time-domain resource, wherein the zero-power device is in a communication dormant state within the first time-domain resource.

2. The method according to claim 1, wherein
the zero-power device being in the communication dormant state within the first time-domain resource comprises:
the zero-power device not expecting to receive communication signals within the first time-domain resource, and/or the zero-power device not sending communication signals within the first time-domain resource.

3. The method according to claim 1 or 2, wherein
the first time-domain resource is determined based on at least one of: an energy harvesting capability of the zero-power device, an energy harvesting manner of the zero-power device, an energy storage capacity of the zero-power device, or ambient energy information of an environment where the zero-power device is located.

4. The method according to any one of claims 1 to 3, wherein
the first time-domain resource is a periodic resource, or the first time-domain resource is an aperiodic resource.

5. The method according to any one of claims 1 to 4, wherein
a frequency-domain resource corresponding to the first time-domain resource comprises at least one of:
a frequency-domain resource for the zero-power device or a frequency-domain resource for another device.

6. The method according to any one of claims 1 to 5, further comprising:
performing, by the zero-power device, energy harvesting within the first time-domain resource.

7. The method according to claim 6, wherein
the zero-power device performs energy harvesting within the first time-domain resource based on at least one of:
a power-supplying signal for the zero-power device, a communication signal for the zero-power device, or a communication signal for another device.

8. The method according to claim 5 or 7, wherein
a signal modulation and demodulation scheme for the zero-power device is different from a signal modulation and demodulation scheme for the other device, and/or an air interface technology used by the zero-power device is different from an air interface technology used by the other device.

9. The method according to any one of claims 1 to 8, wherein
acquiring, by the zero-power device, the first time-domain resource comprises:
receiving, by the zero-power device, first indication information;
wherein the first indication information indicates at least one of: a position of the first time-domain resource, a length of the first time-domain resource, a frequency-domain resource corresponding to the first time-domain resource, or period information for the first time-domain resource.

10. The method according to claim 9, wherein
the first indication information is indication information at a granularity of a cell, or the first indication information is indication information at a granularity of a zero-power device, or the first indication information is indication information at a granularity of a zero-power-device group.

11. The method according to claim 9 or 10, wherein
the first indication information is carried in at least one of: a frame in an authentication and/or association process in a wireless local area network (WLAN), a beacon frame in the WLAN, a channel or signaling in a cellular network, or a zero-power-device dedicated signal.

12. The method according to any one of claims 1 to 8, wherein
acquiring, by the zero-power device, the first time-domain resource comprises:
acquiring, by the zero-power device, the first time-domain resource via information defined by a protocol.

13. A method for wireless communication, comprising:
sending, by a communication device, first indication information to a zero-power device;
wherein the first indication information indicates at least one of: a position of a first time-domain resource, a length of the first time-domain resource, a frequency-domain resource corresponding to the first time-domain resource, or period information for the first time-domain resource;
wherein the zero-power device is in a communication dormant state within the first time-domain resource.

14. The method according to claim 13, wherein
the zero-power device being in the communication dormant state within the first time-domain resource comprises:
the zero-power device not expecting to receive communication signals within the first time-domain resource, and/or the zero-power device not sending communication signals within the first time-domain resource.

15. The method according to claim 13 or 14, wherein
the first time-domain resource is determined based on at least one of: an energy harvesting capability of the zero-power device, an energy harvesting manner of the zero-power device, an energy storage capacity of the zero-power device, or ambient energy information of an environment where the zero-power device is located.

16. The method according to any one of claims 13 to 15, wherein
the first time-domain resource is a periodic resource, or the first time-domain resource is an aperiodic resource.

17. The method according to any one of claims 13 to 16, wherein
a frequency-domain resource corresponding to the first time-domain resource comprises at least one of:
a frequency-domain resource for the zero-power device or a frequency-domain resource for another device.

18. The method according to any one of claims 13 to 17, wherein
the first time-domain resource is used by the zero-power device to perform energy harvesting.

19. The method according to claim 18, wherein
the zero-power device performs energy harvesting within the first time-domain resource based on at least one of:
a power-supplying signal for the zero-power device, a communication signal for the zero-power device, or a communication signal for another device.

20. The method according to claim 17 or 19, wherein
a signal modulation and demodulation scheme for the zero-power device is different from a signal modulation and demodulation scheme for the other device, and/or an air interface technology used by the zero-power device is different from an air interface technology used by the other device.

21. The method according to any one of claims 13 to 20, wherein
the first indication information is indication information at a granularity of a cell, or the first indication information is indication information at a granularity of a zero-power device, or the first indication information is indication information at a granularity of a zero-power-device group.

22. The method according to any one of claims 13 to 21, wherein
the first indication information is carried in at least one of: a frame in an authentication and/or association process in a wireless local area network (WLAN), a beacon frame in the WLAN, a channel or signaling in a cellular network, or a zero-power-device dedicated signal.

23. The method according to any one of claims 13 to 22, wherein
the communication device is one of: an access point (AP), a station (STA), a base station, a transmission reception point (TRP), and a terminal device.

24. A zero-power device, comprising:
a communication unit configured to acquire a first time-domain resource, wherein the zero-power device is in a communication dormant state within the first time-domain resource.

25. A communication device, comprising:
a communication unit configured to send first indication information to a zero-power device;
wherein the first indication information indicates at least one of: a position of a first time-domain resource, a length of the first time-domain resource, a frequency-domain resource corresponding to the first time-domain resource, or period information for the first time-domain resource;
wherein the zero-power device is in a communication dormant state within the first time-domain resource.

26. A zero-power device, comprising a processor and a memory, the memory storing a computer program, and the processor being configured to call and run the computer program stored in the memory, such that the zero-power device executes the method according to any one of claims 1 to 12.

27. A communication device, comprising a processor and a memory, the memory storing a computer program, and the processor being configured to call and run the computer program stored in the memory, such that the communication device executes the method according to any one of claims 13 to 23.

28. A chip, comprising a processor, the processor being configured to call and run a computer program from a memory, such that a device equipped with the chip executes the method according to any one of claims 1 to 12.

29. A chip, comprising a processor, the processor being configured to call and run a computer program from a memory, such that a device equipped with the chip executes the method according to any one of claims 13 to 23.

30. A computer-readable storage medium, configured to store a computer program,
wherein when the computer program is executed, the method according to any one of claims 1 to 12 is implemented.

31. A computer-readable storage medium, configured to store a computer program,
wherein when the computer program is executed, the method according to any one of claims 13 to 23 is implemented.

32. A computer program product, comprising computer program instructions, wherein when the computer program instructions are executed, the method according to any one of claims 1 to 12 is implemented.

33. A computer program product, comprising computer program instructions, wherein when the computer program instructions are executed, the method according to any one of claims 13 to 23 is implemented.

34. A computer program, wherein when the computer program is executed, the method according to any one of claims 1 to 12 is implemented.

35. A computer program, wherein when the computer program is executed, the method according to any one of claims 13 to 23 is implemented.
